# EUROPEAN PATENT APPLICATION

(11) **EP 2 859 790 A2**
(43) Date of publication of application: **15.04.2015**
(21) Application number: 13760070.6
(22) Date of filing: 30.05.2013
(51) Int. Cl.: A01K 1/01

(54) **DEVICE FOR COLLECTING LIQUID PET WASTE AND CORRESPONDING METHOD FOR PRODUCING A NATURAL FERTILISER**

(30) Priority: 01.06.2012 ES 201230847
(71) Applicant: Jardí Peña, Nicolás, 08970 Sant Joan Despí Barcelona (ES)
(72) Inventor: Jardí Peña, Nicolás, 08970 Sant Joan Despí Barcelona (ES)
(74) Representative: Curell Suñol S.L.P.
(86) International application number: PCT/ES2013/070349
(87) International publication number: WO 2013/178860

(57) **Abstract**

Device for collecting liquid pet waste comprising a first liquid waste collecting container (2) covered on the top by a lid (4). Lid (4) is removable and is provided with a plurality of through holes (6) for the liquid waste. Also, first container (2) of device (1) contains organic matter (8) that is compostable, and suitable for being impregnated by said liquid pet waste. The invention also relates to a method for producing natural fertiliser in a collective use urban environment via device (1).

## Description

### Field of the invention

The invention relates to a device for collecting liquid pet waste comprising a first liquid waste collecting container covered on the top by a removable lid provided with a plurality of through holes for said liquid waste.

Also, the invention relates to a method for producing natural fertiliser in a collective use urban environment using the liquid waste collected with the device according to the invention.

### State of the art

Pet waste collecting devices are known in the art, and particularly those applied to dogs, intended to be used in urban environments, like cities and villages. These devices are aimed at providing the owners of these pets with a place where the animal can perform its needs without this harming the other people in the town.

Document ES2306627 discloses a urinary for pets of the type indicated above. This device has a container covered on the top by a lid with holes, intended to collect animal urine. Urine treatment and/or urine attraction materials are placed in the container, like absorbent sanitary sand with hygienic disinfectant balls and/or aromatic materials that attract dog urine. First of all, the products with which the container is filled are expensive, and secondly the waste generated is not easily managed by the town in which the device is used.

### Disclosure of the invention

The aim of the invention is to provide a device for collecting liquid pet waste, which produces environmentally easy to manage waste and added value for the town where it is used.

This aim is obtained by means of a device for collecting liquid pet waste of the type indicated at the beginning, characterized in that the first container contains compostable organic matter, suitable for being impregnated by said liquid pet waste.

The organic matter placed inside the first container generates waste that is rich in nitrogen and which once accumulated and composted can be recycled in the form of fertiliser for the parks and gardens in the town itself.

The invention further includes a number of preferred features that are object of the dependent claims and the utility of which will be highlighted hereinafter in the detailed description of an embodiment of the invention.

The invention also raises the issue of the cost of maintaining the device by the town being as low as possible. So, it is known that the parks and gardens in a town produce a large amount of plant waste which is often thrown away. Therefore, in the preferred embodiment of the invention the organic matter comprises crushed pruning remains from at least one element of the group of trees, bushes, plants and lawns or any combination thereof.

This closes the cycle of reusing the waste produced in the town's parks and gardens, and that of its pets and also at a much lower cost than in the case of the state of the art devices, and with a clear, synergistic effect unknown in the state of the art.

Preferably, the device according to the invention comprises a vertical element projecting from said first container like a post. Thanks to this, the device is used more by dogs and the production of organic matter soaked with liquid waste that can be converted into fertiliser, is increased.

In another preferred embodiment the device comprises a second container for collecting waste products and solid pet waste raised with respect to said first container, to contribute to storing the environment clean.

Also, in a particularly special embodiment, the device comprises a dispenser of means for collecting solid pet waste, raised with respect to said first container, which helps to make the device more hygienic for pet owners to use.

The invention also considers a method for producing natural fertiliser in a collective use urban environment, which comprises the following steps consisting of:
[a] providing in an urban environment at least one device for collecting liquid pet waste comprising a first liquid waste collecting container covered on the top by a removable lid provided with a plurality of through holes for liquid waste,
[b] filling said first container with organic matter that is compostable and suitable for being impregnated by liquid pet waste,
[c] periodically removing the impregnated organic matter from the first container and
[d] actively or passively composting said organic matter obtained in said step [c].

In a preferred embodiment of the method according to the invention, it is envisaged that the organic matter comprises crushed pruning remains from at least one element of the group of trees, bushes, plants and lawns.

Moreover, during the priority year some improvements have been developed in the invention, which are explained below.

Preferably, the device according to the invention comprises independent electrical power supply means, as well as at least one control sensor for at least one control parameter of the organic matter contained in said collecting container or of the actual device and a control and communication unit, said control sensor being able to be supplied by means of said independent electrical power supply means via said control and communication unit. Thanks to this, the device can be controlled remotely from a central station, allowing centralised control of a plurality of devices arranged in a distributed manner at different points in the town. The control sensor is selected from the following group: pH sensor, humidity sensor, timer to measure the time since the last device fill or an anti-vandalism sensor.

The invention has also improved during the priority year the method for producing fertiliser, as it allows for said production to be managed remotely. To do this, in a particularly, preferable way, in the device independent electrical power supply means are arranged, at least one control sensor for at least one control parameter for the organic matter contained in said collecting container or actual device, a control and communication unit, said control sensor being supplied by means of said independent electric power supply via said control and communication unit, and in that there is further provided a remote monitoring station for said device. Then the method comprises following steps:
[e] at a first time (tᵢ), consulting, via said remote monitoring station, said control parameter obtained through said control sensor and storing said control parameter corresponding to said first time (tᵢ),
[f] at a second time (tᵢ₊₁), consulting again, via said remote monitoring station, said control parameter and storing said control parameter corresponding to said second time (tᵢ₊₁),
[g] comparing said control parameter obtained in said first time (tᵢ) and said control parameter obtained in said second time (tᵢ₊₁), and
[h] executing a management action associated with the production of said natural fertiliser depending on said comparison [g].

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Fig. 1, a diagrammatic perspective view of the device for collecting liquid pet waste according to the invention.
Fig. 2, a front view of the device in Figure 1.
Fig. 3, a side view of the device in Figure 1.
Fig. 4, a top plan view of the device in Figure 1.
Fig. 5, a detailed sectioned view according to the plane V-V of the device according to the invention.
Fig. 6, a diagrammatic perspective view of a second embodiment of the device according to the invention.
Fig. 7, a detailed view of the device in Figure 6 cut along a similar plane to plane V-V.

### Detailed description of an embodiment of the invention

The figures show a device 1 according to the invention for collecting liquid pet wastes. Preferably device 1 is intended for pets such as dogs, but there is no exclusion to it being used for other pets like cats and others.

In particular, device 1 is conceived to be installed in towns so that it can be collectively used by a plurality of users. However, neither must this be interpreted in a limiting manner, since the same device 1 shown in the figures could be used privately.

Device 1 has a first liquid waste collecting container 2 intended to contain compostable organic matter 8. This first container 2 has a shape of a rectangular basin with a flat base. The organic matter 8 contained therein is impregnated with the liquid waste dropped onto device 1 by the pets.

Also to prevent the pets from scratching on the organic matter 8 once they have done their business and therefore emptying first container 2, the top part of it is covered with a removable lid 4. Lid 4 is formed in two halves of a flat plate, assembled in a hinged manner along hinging edges 16 of first container 2. Also, to open the lid 4 more easily grasping rings 18 are provided. Thanks to this arrangement it is easy to access the inside of first container 2.

Furthermore, to guarantee the liquid waste falling inside first container 2, lid 4 is provided with a plurality of through holes 6, being large enough to allow the animal to walk comfortable over lid 4, while at the same time facilitating the drain of the liquid waste through said holes 6.

As already mentioned, device 1 according to the invention is conceived to be used collectively in towns and in places where pets meet, like parks or the like. First of all, device 1 must facilitate the animals doing their business in device 1 with the consequent improvement in town hygiene. However, device 1 by using compostable organic matter 8 creates an important synergy, because it is generating a by-product that can be used as natural fertiliser to maintain parks and gardens in the town as will be explained later.

Also, in a preferred embodiment, organic matter 8 comes from the parks and gardens of the same town where device 1 is installed. So, this organic matter 8 comprises crushed pruning remains from at least one element of the group of trees, bushes, plants and lawns or any combination thereof. The parks and gardens in a town are essentially a regenerable source of organic matter 8 and therefore using them represents a noticeable saving for the town. But also, once this organic matter 8 is used in device 1 it is revalued because its properties as compostable matter are improved. In particular, thanks to the liquid waste these pruning remains are enriched, among others with the nitrogen from the urea, thereby improving its possibilities as a fertiliser. Also the more the pruning remains are crushed, the easier they are impregnated or soaked in the liquid waste.

The figures also show that the device can have a vertical element 10 projecting from first container 2 like a post. Preferably vertical element 10 is centred in first container 2, but it could also be placed in a corner. This vertical element 10 is intended to attract the animal so that it urinates within the perimeter of first container 2, offering it a support for marking out its territory. Also it has been noted that, in the case of a dog, when the first one has urinated on the vertical element, the ones coming along later try to erase its traces by urinating in turn over the same element to mark out their territory. Consequently, the collection of liquid waste is enhanced.

Above vertical element 10 a second container 12 is provided like a waste paper bin that is intended for collecting solid faeces and other waste that can be generated both by an animal and its owner.

Also to improve hygiene when using device 1 according to the invention joined to second container 12 a solid pet waste collecting means dispenser 14 is provided for picking up the solid waste of the pet. For example, dispenser 14 can contain plastic bags, but in order to generate easily recyclable waste it is preferably to use paper bags.

In addition, and optionally, the device 1 in this embodiment has a post 20 intended to support a communication panel 22. This communication panel 22 can be used both as an advertising support, and as a kind of indicator support so that it is possible to recognise the existence of device 1 from a considerable distance and consequently increase the production of organic matter 8 impregnated with liquid waste.

Device 1 according to the invention is made preferably from materials that are highly resistant to the liquid waste and particularly resistant to dog urine and which withstand outdoor weather conditions well without deteriorating prematurely. These materials can be, among others stainless steel, aluminium or conveniently coated steels.

As explained, device 1 according to the invention not only makes it possible to satisfactorily manage two of the waste products generated in an urban environment, it also makes it possible to revalue them, because it allows a natural fertiliser to be obtained.

So, the invention provides a method for producing natural fertiliser, where first of all a device 1 to collect liquid pet waste must be provided. The device comprises a first collecting container 2 for this liquid waste which is covered on the top by a removable lid 4 provided with a plurality of through holes 6.

Then, this first container 2 is filled with organic matter 8 that is compostable and impregnable with liquid pet waste.

Regularly, the town's park and garden maintenance personnel remove organic matter 8 from first container 2 and compost it actively or passively.

In the case of active composting, this is about controlling the temperature of the organic matter impregnated with liquid waste to enhance the development of the most favourable bacteria for converting organic matter 8 into compost.

Alternatively, and for those towns that have less means for carrying out the process in an industrial, controlled way, the compost can simply be generated passively. In this second case, the composting process is much slower and takes places at room temperature.

In the preferred embodiment in the case of applying the device in a town environment, organic matter 8 comprises crushed pruning remains from at least one element in the group made up of trees, bushes, plants and lawns.

So, the compost obtained from organic matter 8 impregnated with pet waste can be used directly as a natural fertiliser for the parks and gardens in the city. Possibly, this enriched compost can be combined with non-enriched compost to modify its chemical properties.

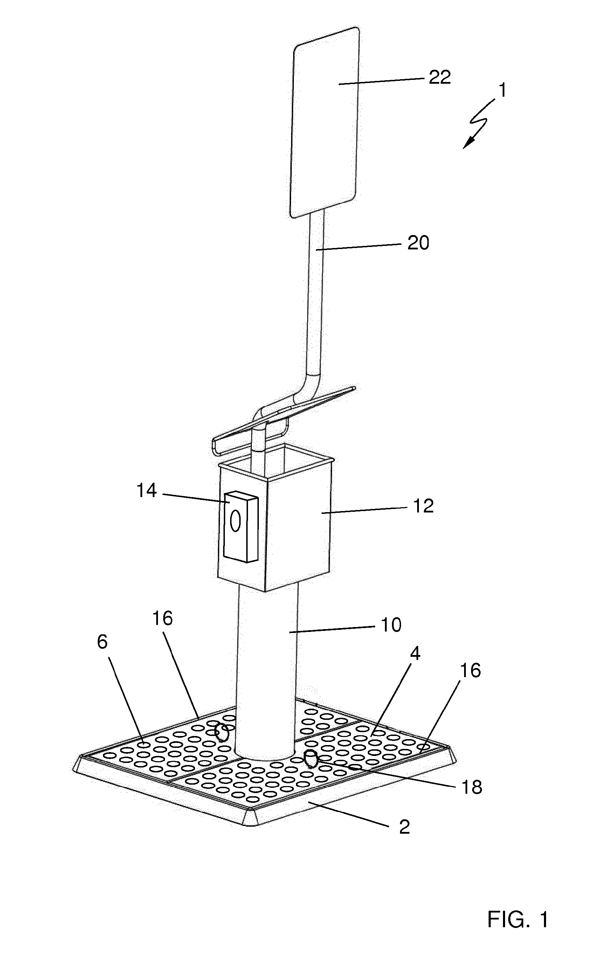

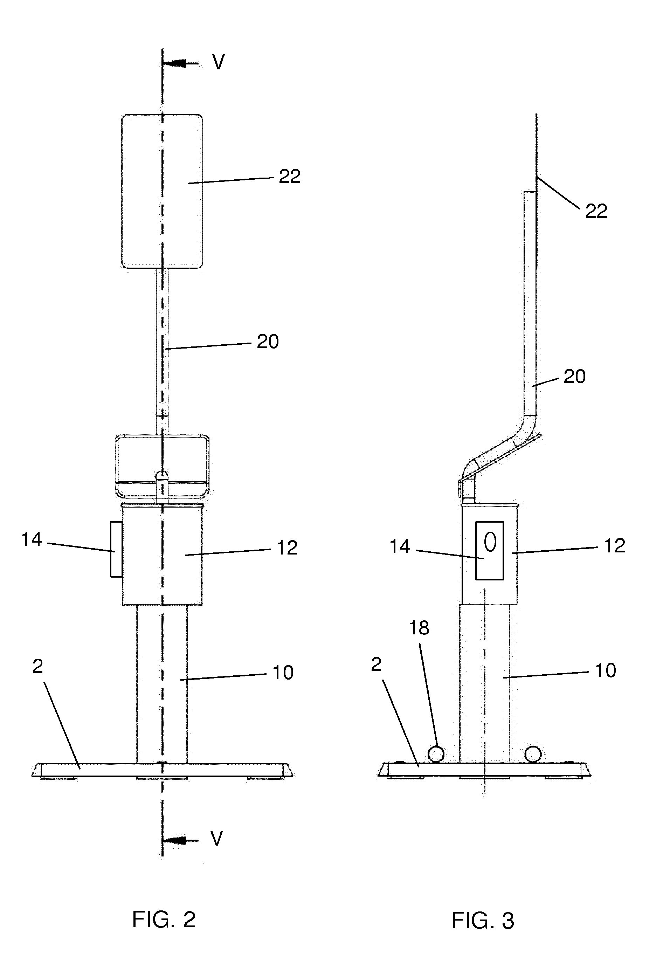

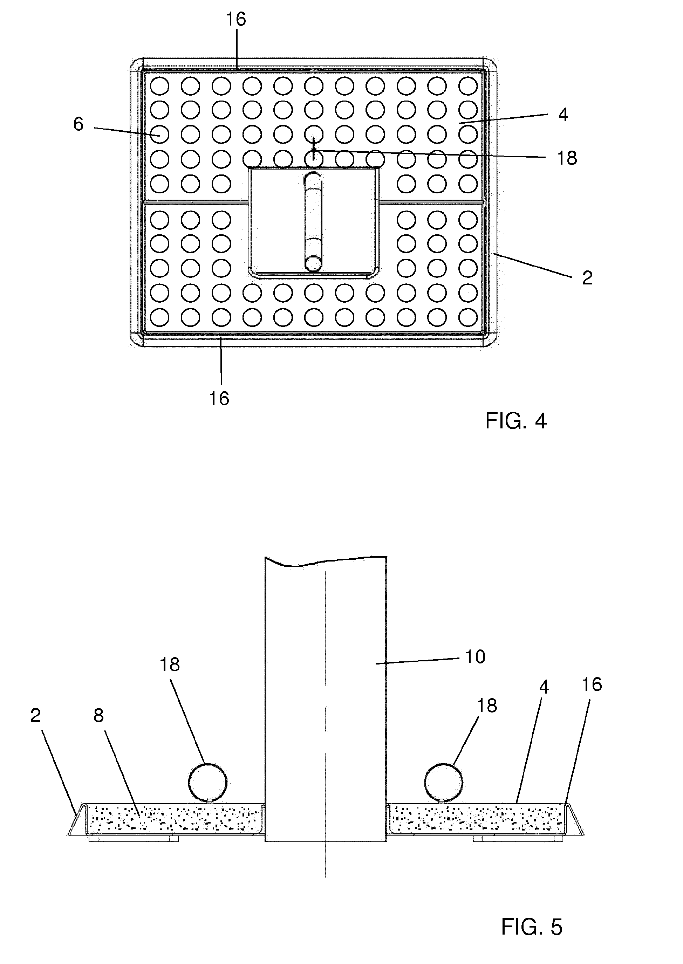

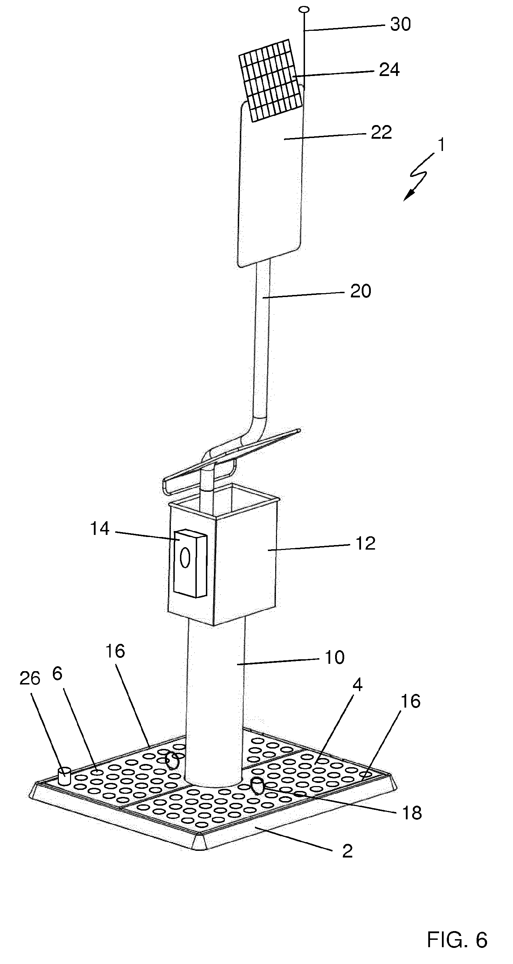

Figure 6 shows a second embodiment, which shows device 1, as well as the elements already explained in Figures 1 to 5, and also comprises independent electrical power supply 24. In this example, these independent electrical power supply means 24 are made up of a solar panel arranged on communication panel 22. Obviously, these independent means are used to prevent device 1 from having to be connected to the electricity mains, and yet still be able to operate independently. Alternatively, these independent means 24 could also be replaceable batteries or other similar systems.

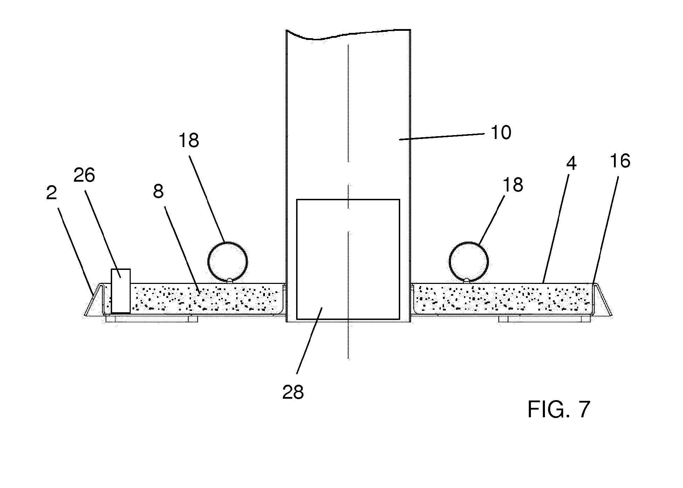

Returning to Figure 6, the photovoltaic panel is responsible for generating the current needed to supply a control sensor 26 for at least one control parameter of the organic matter contained or of the actual device 1. To do this, the electricity generated by the photovoltaic panel is stored in a control and communication unit 28 which inside comprises a battery and which is represented diagrammatically at the base of the post in Figure 7. Control and communication unit 28 supplies control sensor 26. This sensor 26, or eventually group of sensors, can measure parameters such as pH or the humidity inside container 2. The sensor can also control the time that has elapsed since the last time container 2 was filled with organic matter or preferably with town pruning remains, or detect if device 1 has been manipulated maliciously and therefore needs maintenance. Finally, device 1 according to the invention also has an antenna 30 aimed at allowing communication between the device and a remote control centre, not shown in the figures.

In a preferred embodiment, device 1 according to Figures 6 and 7 can be managed remotely, inside a network of interconnected devices. To this end, the invention considers providing a system with a plurality of devices 1 which is controlled by a remote monitoring station.

This way, once the various devices 1 are installed in the town the production of fertiliser can be managed more efficiently. To this end, the method for producing natural fertiliser in a collective use urban environment according to the invention considers a step according to which at a first time tᵢ, via the remote monitoring station, a control parameter is consulted which has been obtained by control sensor 26 and the value obtained is saved or stored in the memory to be used subsequently.

Then at a second time tᵢ₊₁, again via the remote monitoring station the control parameter is consulted and is stored.

Finally, the control parameter obtained in the first time tᵢ₊₁ and the control parameter obtained in said second time tᵢ₊₁ are compared, and based on the comparison a management action associated with the production of natural fertiliser is executed.

The management actions to be executed can be very varied. If for example, control sensor 26 is intended to control the time that has elapsed since container 2 was filled, and the comparison of the values gives the result that the maximum desired time has elapsed, the monitoring station can register a warning so that the town team in charge of managing this waste product goes to device 1, removes its contents to be taken to a composting unit and fills is again with new fresh, organic matter, and preferably with pruning remains from the actual town or even from other neighbouring towns.

Optionally, other actions can be like adding water to increase the humidity level of the pruning remains or to modify its pH. Finally, these management actions also include not doing anything, in other words, simply continuing with the regular monitoring of device 1.

## Claims

1. Device for collecting liquid pet waste comprising a first liquid waste collecting container (2) covered on the top by a removable lid (4) provided with a plurality of through holes (6) for said liquid waste, **characterized in that** said first container (2) contains compostable organic matter (8), suitable for being impregnated by said liquid pet waste.

2. Device for liquid pet waste according to claim 1, **characterized in that** said organic matter (8) comprises crushed pruning remains from at least one element of the group of trees, bushes, plants and lawns or any combination thereof.

3. Device for liquid pet waste according to claim 1 or 2, **characterized in that** it comprises a vertical element (10) projecting from said first container (2) like a post.

4. Device for liquid pet waste according to any of the claims 1 to 3, **characterized in that** it comprises a second container (12) for collecting waste products and solid pet waste raised with respect to said first container (2).

5. Device for liquid pet waste according to any of the claims 1 to 4, **characterized in that** it comprises a solid pet waste collection means dispenser (14) raised with respect to said first container (2).

6. Device for liquid pet waste according to any of the claims 1 to 5, **characterized in that** it comprises independent electrical power supply means (24), as well as at least one control sensor (26) for at least one control parameter of the organic matter contained in said collecting container (2) or of the actual device (1) and a control and communication unit (28), said control sensor (26) being able to be supplied by means of said independent electrical power supply means (24) via said control and communication unit (28).

7. Method for producing natural fertiliser in a collective use urban environment, **characterized in that** it comprises the following steps consisting of:
[a] providing in said urban environment at least one device for collecting liquid pet waste comprising a first liquid waste collecting container (2) covered on the top by a removable lid (4) provided with a plurality of through holes (6) for said liquid waste,
[b] filling said first container (2) with organic matter (8) that is compostable and suitable for being impregnated by liquid pet waste,
[c] periodically removing said impregnated organic matter (8) from said first container (2) and
[d] actively or passively composting said organic matter (8) obtained in said step [c].

8. Method for producing natural fertiliser according to claim 7, **characterized in that** said organic matter (8) comprises crushed pruning remains from at least one element of the group of trees, bushes, plants and lawns.

9. Method for producing natural fertiliser according to claim 7 or 8, **characterized in that** in said device (1) there are arranged
[a] independent electrical power supply means (24),
[b] at least one control sensor (26) for at least one control parameter for the organic matter contained in said collecting container (2) or actual device (1),
[c] a control and communication unit (28), said control sensor (26) being supplied by means of said independent electric power supply (24) via said control and communication unit (28),
and **in that** there is further provided
[d] a remote monitoring station for said device (1)
and **in that** said method comprises the steps consisting of:
[e] at a first time (tᵢ), consulting, via said remote monitoring station, said control parameter obtained through said control sensor (26) and storing said control parameter corresponding to said first time (tᵢ),
[f] at a second time (tᵢ₊₁), consulting again, via said remote monitoring station, said control parameter and storing said control parameter corresponding to said second time (tᵢ₊₁),
[g] comparing said control parameter obtained in said first time (tᵢ) and said control parameter obtained in said second time (tᵢ₊₁), and
[h] executing a management action associated with the production of said natural fertiliser depending on said comparison [g].
